# EUROPÄISCHE PATENTANMELDUNG

(11) **EP 1 560 410 A2**
(43) Veröffentlichungstag der Anmeldung: **03.08.2005**
(21) Anmeldenummer: 05000935.6
(22) Anmeldetag: 18.01.2005
(51) Int. Cl.: H04M 3/523, H04M 3/428

(54) **Kommunikationsanordnung zur automatisierten Annahme und Vermittlung einer eingehenden Kommunikationsverbindung**

(30) Priorität: 28.01.2004 DE 102004004276
(71) Anmelder: SIEMENS AKTIENGESELLSCHAFT, 80333 München (DE)
(72) Erfinder: Schmitz, Ulrich, 52146 Wüselen (DE)

(57) **Zusammenfassung**

Die Erfindung betrifft eine Kommunikationsanordnung zur automatisierten Vermittlung einer eingehenden Kommunikationsverbindung (b). Dazu ist eine Vermittlungseinrichtung (VE2) zur Weiterverbindung der Kommunikationsverbindung (b) zu einem Vermittlungsziel (AG1) angeordnet. Eine erste Verarbeitungseinheit (IV2) dient der interaktiven Abfrage, Speicherung und Auswertung von Grundinformationen eines Anrufers, wobei die erste Verarbeitungseinheit (IV2) zum Zusammenwirken mit einem Speicher (SP2) ausgebildet ist, in dem anhand der Grundinformationen das Vermittlungsziel (AG1) auswählbar und aus dem eine Adressinformation über das ausgewählte Vermittlungsziel (AG1) abrufbar ist. Dabei ist die erste Verarbeitungseinheit (IV2) zur Übertragung der Adressinformation zu der Vermittlungseinrichtung (VE2) für die Weiterverbindung und die Übergabe der Kommunikationsverbindung (b) zu einer Warteeinrichtung (W2) eingerichtet ist. Die Warteeinrichtung (W2) ist zum Halten der weiterverbundenen Kommunikationsverbindung ausgestaltet, wobei das Halten solange erfolgt, bis die weiterverbundene Kommunikationsverbindung von dem Vermittlungsziel angenommen wird. Die Warteeinrichtung (W2) ist mit einer zweiten Verarbeitungseinheit (IV3) zur interaktiven Abfrage, Speicherung und Auswertung von weiteren Informationen ausgestattet.

## Beschreibung

Die Erfindung betrifft eine Kommunikationsanordnung zur automatisierten Annahme und Vermittlung einer eingehenden Kommunikationsverbindung und ein Verfahren zum Betrieb einer Verarbeitungseinheit zur interaktiven Abfrage, Speicherung und Auswertung von Informationen eines Anrufers.

Für telefonische Anfragen von Kunden und anderen Anrufern stellen Behörden, Banken, Versicherungen und andere Unternehmen häufig Zentralrufnummern zur Verfügung, mit denen der Anrufer nicht gezielt eine bestimmte Abteilung oder einen bestimmten Mitarbeiter anruft, sondern mit der eine ganze Gruppe von Vermittlungszielen erreicht werden kann. Solche Zentralrufnummern werden häufig auch als "Hotlines" bezeichnet. Die Anrufe auf solchen Zentralrufnummern werden dabei - meist vollautomatisch - innerhalb einer Gruppe von Mitarbeitern verteilt, den sog. Agenten. Dabei wird eine solche Anordnung häufig auch als "Call-Center" und eine entsprechende Einrichtung zur Anrufverteilung wird als ACD(Automatic Call Deflection) bezeichnet.

Häufig ist die Anrufverteilungseinrichtung Bestandteil einer privaten Nebenstellenanlage (Vermittlungseinrichtung), die die eingehenden Kommunikationsverbindungen (Anrufe) nach einem festgelegten Algorithmus auf die verfügbaren Agenten verteilt. Dabei kann beispielsweise der jeweils nächste eingehende Anruf an denjenigen Agenten geleitet werden, der gerade frei ist und der von allen freien Agenten bislang die längste Wartephase hatte.

Eine solche einfache Anrufverteilung erlaubt jedoch keine Berücksichtigung einer Spezialisierung der Agenten, d.h., dass die Zuordnung des jeweiligen Anrufers zu dem jeweiligen erreichten Agenten zufälliger Natur ist und dass der Anrufer im Falle einer Spezialisierung der Agenten mit einer hohen Wahrscheinlichkeit zuerst von einem ersten (nicht zuständigen) zu einem weiteren, zuständigen Agenten (Vermittlungsziel) weiterverbunden werden muss, bevor der Anruf qualifiziert beantwortet bzw. bearbeitet wird.

Weiterhin sind auch Anrufverteileinrichtungen bekannt, die die Rufnummerninformation ("Clip") des Anrufers auswerten und dann den Anruf (z.B. bei Auswertung der Vorwahlnummer) zu demjenigen Agenten weitervermitteln, der einem entsprechenden Vorwahlnummernbereich zugeordnet ist. Alternativ kann auch die übertragene Rufnummerninformation mit Einträgen in einer Datenbank verglichen werden, um im Falle einer Übereinstimmung anhand der Rufnummerninformation den Anrufer beispielsweise als Kunden zu identifizieren und somit diesen Anrufer mit dem passenden Sachbearbeiter zu verbinden.

Da die (in vielen Fällen erst gar nicht übertragene) Rufnummerninformationen eingehender Kommunikationsverbindungen häufig nicht genügend Informationsgehalt für eine zufriedenstellende Weitervermittlung bieten, werden als Alternative zu einer Vermittlung mit Hilfe einer natürlichen Person vermehrt Verarbeitungseinheiten eingesetzt, die mit Hilfe eines computergesteuerten interaktiven Dialogs die zur Weitervermittlung notwendigen Informationen von dem Anrufer abfragen. Solche Verarbeitungseinheiten, die regelmäßig nicht Bestandteil einer Vermittlungseinrichtung selbst sind, werden häufig auch als IVR-Systeme ("Interactive Voice Response") bezeichnet.

Bei den IVR-Systemen werden dem Anrufer typischer Weise mit Hilfe einer synthetisch erzeugten Stimme oder durch abgespielte Tonaufnahmen Fragen gestellt, die der Anrufer entweder durch Tastendrücke an seinem Kommunikationsendgerät (MFV-Wahl) oder durch das Sprechen von Schlüsselworten ("ja", "nein", "eins", "zwei", "drei") beantwortet. Diese Antworten werden durch eine entsprechende Erkennungseinrichtung (MFV-Tonerkennung oder Sprachanalyseverfahren) ausgewertet, zu einem Datensatz zusammengefasst und zu einer Anrufverteilungseinrichtung übertragen.

Diese Anrufverteilungseinrichtung, hierbei häufig auch als "Routing-Engine" oder auch "Call-Center-Routing-Engine" bezeichnet, ist im wesentlichen mit einem Speicher ausgestattet, in welchem die Agenten eines Call-Centers mit ihren internen Rufnummern (Adressinformationen) und ihren "Eigenschaften" (beispielsweise Zuständigkeiten, Sachgebiete, etc.) gespeichert sind. Anhand der mit dem Datensatz übertragenen Informationen wird dabei aus dem Speicher der passende Agent (also das Vermittlungsziel) oder eine Gruppe von passenden Agenten herausgesucht. Zwischenzeitlich wird die Kommunikationsverbindung, in der der Anrufer auf die Verbindung mit dem Vermittlungsziel wartet, von dem IVR-System in die Vermittlungseinrichtung zurückgestellt und dort in einem sog. Wartefeld gehalten, d.h., dass der Anrufer mit einem sog. "virtuellen Port" der Vermittlungseinrichtung verbunden ist und einen Rufton hört oder dass dem Anrufer eine sog. Wartemusik eingespielt wird. Während dieser Wartezeit baut die Vermittlungseinrichtung eine Kommunikationsverbindung zu dem Vermittlungsziel auf und schaltet die wartende Kommunikationsverbindung auf das Kommunikationsendgerät des gerufenen Agenten, sobald der Ruf an diesem Kommunikationsendgerät signalisiert wird (das Kommunikationsendgerät "klingelt"). Nun hört der Anrufer so lange einen Rufton, bis der Agent den Ruf annimmt.

Bei den bekannten Anordnungen zu einer automatisierten Annahme und Vermittlung von Kommunikationsverbindungen hat sich als nachteilig erwiesen, dass diese eine geringe Funktionalität aufweisen.

Es ist daher eine Aufgabe der vorliegenden Erfindung, die Funktionalität von Kommunikationsanordnungen mit automatisierter Annahme und Vermittlung zu erweitern.

Die Aufgabe wird für die Kommunikationsanordnung durch die Merkmale des Patentanspruchs 1, für die Verarbeitungseinheit durch die Merkmale des Patentanspruchs 4 und für das Verfahren durch die Merkmale des Patentanspruchs 8 gelöst.

Die Lösung sieht für die Kommunikationsanordnung vor, dass zur automatisierten Annahme und Vermittlung eine eingehende Kommunikationsverbindung eine Vermittlungseinrichtung zur Weiterverbindung der Kommunikationsverbindung zu einem Vermittlungsziel eingesetzt wird. Dabei dient eine erste Verarbeitungseinheit zur interaktiven Abfrage, Speicherung und Auswertung von Grundinformationen eines Anrufers, wobei die erste Verarbeitungseinheit zum Zusammenwirken mit einem Speicher ausgebildet ist, indem anhand der Grundinformationen das Vermittlungsziel auswählbar und aus dem eine Adressinformation über das ausgewählte Vermittlungsziel abrufbar ist. Die erste Verarbeitungseinheit ist zur Übertragung der Adressinformation zu der Vermittlungseinrichtung für die Weiterverbindung der Kommunikationsverbindung und zur Übergabe der Kommunikationsverbindung zu einer Warteeinrichtung eingerichtet, wobei die Warteeinrichtung zum Halten der weiterverbundenen Kommunikationsverbindung ausgestaltet ist und das Halten so lange erfolgt, bis die weiterverbundene Kommunikationsverbindung angenommen wird. Dabei ist die Warteeinrichtung mit einer zweiten Verarbeitungseinheit zur interaktiven Abfrage, Speicherung und Auswertung von weiteren Informationen ausgestattet. Dadurch können von einem Anrufer auch in dem Zeitraum, in dem dessen Kommunikationsverbindung in der Warteeinrichtung gehalten wird, interaktiv Informationen abgefragt werden. Außerdem kann eine solche Kommunikationsanordnung mit einer kostengünstig aufgebauten Vermittlungseinrichtung betrieben werden, welche keine eigene Warteeinrichtung benötigt.

Ein weiterer Vorteil ist dadurch gegeben, dass die Rückgabe der Verbindung von dem IVR-System zu der Vermittlungseinrichtung entfallen kann. Dabei muss das IVR-System nicht auf die Steuerung eines Wartefeldes (Warteeinrichtung) der verwendeten Vermittlungseinrichtung angepasst sein. Im Falle eines Nicht-Annehmens der vermittelten Verbindung durch den ausgewählten Agenten muss der Ruf dann auch nicht mehr zur erneuten Vermittlung als "unzustellbar" in das IVR-System zurückgegeben werden, wodurch eine komplexe und damit fehleranfällige Prozedur für das Kommunikationssystem vermieden wird.

Die Lösung sieht für die Verarbeitungseinheit vor, zur interaktiven Abfrage, Speicherung und Auswertung von Grundinformationen eines Anrufers die Verarbeitungseinheit zum Zusammenwirken mit einem Speicher auszubilden. In diesem ist anhand der Grundinformationen das Vermittlungsziel auswählbar und eine Adressinformation über das ausgewählte Vermittlungsziel abrufbar, wobei die Verarbeitungseinheit zur Übertragung der Adressinformation zu der Vermittlungseinrichtung für die Weiterverbindung der Kommunikationsverbindung und zur Übergabe der Kommunikationsverbindung zu einer Warteeinrichtung eingerichtet ist. Dabei ist die Warteeinrichtung zum Halten der weiterverbundenen Kommunikationsverbindung ausgestaltet, wobei das Halten solange erfolgt, bis die weiterverbundene Kommunikationsverbindung angenommen wird, und wobei die Warteeinrichtung mit einer zweiten Verarbeitungseinheit zur interaktiven Abfrage, Speicherung und Auswertung von weiteren Informationen ausgestattet ist. Durch eine solche Verarbeitungseinheit, in die vorteilhafter Weise die Warteeinrichtung und die zweite Verarbeitungseinheit integriert sind, können auch einfache Vermittlungseinrichtungen ohne eigenes Wartefeld mit einer leistungsfähigen und komfortablen Funktion zur Anrufannahme und Weitervermittlung versehen werden. Dabei kann die Funktion der zweiten Verarbeitungseinheit auch durch eine erste Stufe der Verarbeitungseinheit ausgeübt werden, wodurch eine internes Weiterleiten der Kommunikationsverbindung innerhalb der Verarbeitungseinheit vermieden wird.

Die Kommunikationsanordnung ist durch die Merkmale der abhängigen Patentansprüche 2 und 3 und die Verarbeitungseinheit ist durch die Merkmale des abhängigen Patentanspruchs 5 vorteilhaft weiter ausgestaltet. Die dabei beschriebenen Merkmale und Vorteile gelten dabei sinngemäß auch für das erfindungsgemäße Verfahren.

Wenn die Warteeinrichtung mit der zweiten Verarbeitungseinheit durch eine Stufe der ersten Verarbeitungseinheit gebildet ist, kann die Weiterschaltung der Kommunikationsverbindung zwischen der ersten und der zweiten Verarbeitungseinheit eingespart werden. Die erste Verarbeitungseinheit bleibt dann während der gesamten interaktiven Abfrage, Speicherung und/oder Auswertung der Informationen der Endpunkt der Kommunikationsverbindung. Außerdem kann der Anruf dabei auch bei einer Nicht-Erreichbarkeit des ausgewählten Vermittlungsziels zu einem alternativen Vermittlungsziel weiterverbunden werden.

Wenn die zweite Verarbeitungseinheit zusammenwirkend mit dem Speicher ausgebildet ist, indem anhand der Grundinformationen und der weiteren Informationen ein alternatives Vermittlungsziel auswählbar ist, und aus dem eine weitere Adressinformation über das alternative Vermittlungsziel abrufbar ist, wobei die zweite Verarbeitungseinheit zur Übertragung der Adressinformation zu der Vermittlungseinrichtung für die Weiterverbindung der Kommunikationsverbindung zu dem alternativen Vermittlungsziel eingerichtet ist, kann die Auswahl des Vermittlungszieles so lange korrigiert und optimiert werden, bis das zuerst ausgewählte Vermittlungsziel die Kommunikationsverbindung übernimmt. Dabei kann die Weitervermittlung der Kommunikationsverbindung auf der einen Seite schon zu einem sehr frühen Zeitpunkt erfolgen, aber auf der anderen Seite können dennoch auch die später gewonnenen weiteren Informationen für die Auswahl des Vermittlungsziels verwendet werden.

Die Lösung sieht für das Verfahren vor, dass zum Betrieb einer Verarbeitungseinheit zur interaktiven Abfrage, Speicherung und Auswertung von Informationen eines Anrufers mehrere Verfahrensschritte ausgeführt werden. Zuerst wird eine Kommunikationsverbindung des Anrufers durch eine Vermittlungseinrichtung zu der Verarbeitungseinheit geschaltet. Anschließend werden durch die Verarbeitungseinheit in einem ersten interaktiven Prozess Grundinformationen von dem Anrufer abgefragt, wonach von der Verarbeitungseinheit durch Zugriff auf einen Speicher anhand der Grundinformationen Adressinformationen eines Vermittlungszieles für den Anrufer ermittelt werden. Anschließend werden durch die Bearbeitungseinheit in einem zweiten interaktiven Prozess weitere Informationen von dem Anrufer abgefragt, während von der Verarbeitungseinheit die Adressinformationen zu der Vermittlungseinrichtung übermittelt und damit die Übergabe der Kommunikationsverbindung zu dem ermittelten Vermittlungsziel initiiert wird, wobei ein Kommunikationsendgerät des Vermittlungszieles die zu übergebende Kommunikationsverbindung durch einen Ruf signalisiert. Schließlich wird der Ruf an dem Kommunikationsendgerät des Vermittlungszieles angenommen, wodurch die Kommunikationsverbindung an dieses Kommunikationsendgerät übergeben wird. Gleichzeitig wird in der Verarbeitungseinheit der zweite interaktive Prozess zur Abfrage der weiteren Informationen beendet. Durch die Ausführung dieser Verfahrensschritte erfolgt während der gesamten Zeit, in der die Verarbeitungseinheit den Endpunkt der Kommunikationsverbindung bildet, eine Analyse des akustischen Signals (Sprachdatenstrom) bzw. der (Tastatur-)Eingaben des Anrufers. Außerdem können durch das erfindungsgemäße Verfahren auch solche Vermittlungseinrichtungen eingesetzt werden, die kein eigenes "Wartefeld" für zu haltende Kommunikationsverbindungen aufweisen. Dadurch, dass von der Vermittlungseinrichtung die Kommunikationsverbindung nicht selbst gehalten werden muss, sondern lediglich in einem ersten Schritt zu der Verarbeitungseinheit weitergeschaltet wird, und in einem weiteren Schritt zu dem (endgültigen) Vermittlungsziel weitergeschaltet wird, wird die Vermittlungseinrichtung wesentlich entlastet und kann somit ökonomischer aufgebaut sein. Eine besondere Anpassung zwischen Verarbeitungseinheit und Vermittlungseinrichtung ist dabei nicht notwendig.

Ausführungsbeispiele zur Erläuterung der erfindungsgemäßen Kommunikationsanordnung sind nachfolgend anhand der Zeichnungen erläutert und dienen gleichzeitig der Erläuterung eines Ausführungsbeispiels des erfindungsgemäßen Verfahrens.

Dabei zeigt:
- Figur 1: eine erfindungsgemäße Kommunikationsanordnung mit einer Vermittlungseinrichtung, einer Verarbeitungseinheit mit einer Warteinrichtung, einen Speicher und ein Vermittlungsziel, und
- Figur 2: den Stand der Technik mit einer Vermittlungseinrichtung mit einer (integrierten) Warteeinrichtung, eine Verarbeitungseinheit, einen Speicher und ein Vermittlungsziel.

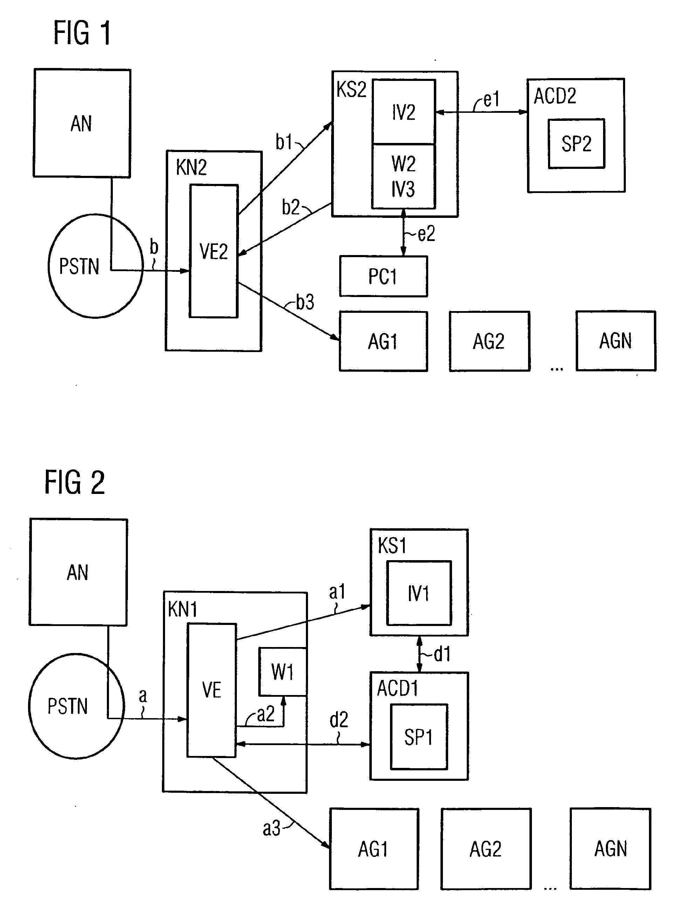

Die Figur 2 zeigt eine Kommunikationsanordnung zur automatisierten Annahme und Vermittlung einer eingehenden Kommunikationsverbindung a gemäß dem Stand der Technik. Darin ist ein Kommunikationsendgerät AN eines Anrufers über ein öffentliches Kommunikationsnetzwerk PSTN mit einem Kommunikationsknoten KN1 verbunden. In einem (hier nicht dargestellten) privaten Kommunikationsnetzwerk sind der Kommunikationsknoten KN1, ein Kommunikationsserver KS1, eine Anrufverteilungseinrichtung ACD1 und Kommunikationsendgeräte AG1, AG2, AGN angeschlossen, wobei die letztgenannten Kommunikationsendgeräte AG1, AG2, AGN verschiedenen "Agenten" (Mitarbeitern) eines Unternehmens (Call-Center) zugeordnet und als Vermittlungsziele auswählbar sind.

In den Figuren sind Kommunikationsverbindungen in Form von Pfeilen visualisiert, wobei ein- und dieselbe Kommunikationsverbindung durch Umschalten oder Weitervermitteln nacheinander verschiedene Endpunkte in dem privaten Kommunikationsnetzwerk haben kann. Datenverbindungen (d1, d2, e1, e2) sind in den Figuren als Doppelpfeile dargestellt.

Die in den Figuren dargestellten Kommunikationsverbindungen können sowohl leitungsvermittelte Kommunikationsverbindungen als auch Kommunikationskanäle in einem Sprachdatennetzwerk (VoIP-Netzwerk; VoIP = Voice-over-Internet-Protocol) sein. Im letztgenannten Fall ist beispielsweise der Kommunikationsknoten KN1 nicht als leitungsvermittelnde Telefonanlage, sondern als Steuerungseinrichtung (z.B. Gatekeeper oder SIP-Proxy-Server)eines Sprachdatennetzes ausgeführt; die zugehörigen Kommunikationsendgeräte werden dabei auch als "Clients" bezeichnet.

Im Folgenden wird anhand der Figur 2 erläutert, in welcher Weise im Stand der Technik eine Kommunikationsverbindung in der gezeigten Kommunikationsanordnung weitervermittelt wird. Das Kommunikationsendgerät AN des Anrufers wird über das öffentliche Kommunikationsnetzwerk PSTN über die Kommunikationsverbindung a mit dem Kommunikationsknoten KN1 verbunden und wird von einer Vermittlungseinrichtung VE des Kommunikationsknotens KN1 über die Teil-Kommunikationsverbindung a1 auf den Kommunikationsserver KS1 geschaltet und dort von einer Verarbeitungseinheit IV1 des Kommunikationsservers KS1 entgegengenommen. Die Verarbeitungseinheit IV1 ist eine interaktive Verarbeitungseinheit, die über die Kommunikationsverbindung a, a1 von dem Anrufer Grundinformationen abfragt. In diesem Beispiel bekommt der Anrufer dabei zunächst zur Auswahl eine Liste von Abteilungen angeboten, mit denen er verbunden werden könnte (Vertrieb, Einkauf, Kundendienst) wobei der Kunde für jede der Abteilungen eine zugeordnete Tonwahltaste (MFV-Taste) seines Kommunikationsendgerätes AN1 drücken kann. Nach der Auswahl der Abteilung wird in einem nächsten Schritt durch die Verarbeitungseinheit IV1 von dem Kunden noch die Postleitzahl seines Standortes abgefragt, und danach werden die in Erfahrung gebrachten Angaben (Abteilung, Postleitzahl) zu einem Datensatz zusammengefasst und von der Verarbeitungseinheit IV1 über die Datenverbindung d1 zu der Anrufverteilungseinrichtung ACD1 übermittelt.

Außerdem beendet die Verarbeitungseinheit IV1 die Teil-Kommunikationsverbindung a1 und übergibt der Vermittlungseinrichtung VE beim Abbau der Teil-Kommunikationsverbindung a1 eine Anweisung, wonach die Kommunikationsverbindung a von der Vermittlungseinrichtung VE über die (interne) Teil-Kommunikationsverbindung a2 zu einer Warteeinrichtung W1 ("Wartefeld") des Kommunikationsknotens KN1 verbunden wird. Nun hört der Anrufer eine Wartemelodie oder eine Audiodatei mit Musik und Sprache. Im Falle von sog. "Multimedia-Clients" können natürlich auch Video-Clips o.ä. als "Warte-Information" eingesetzt werden.

Anhand der mit dem Datensatz übertragenen Grundinformationen wählt die Anrufverteilungseinrichtung ACD1 aus ihrem Speicher SP1 einen für die Entgegennahme des Anrufes geeigneten Mitarbeiter (Agenten) aus und ruft dabei aus dem Speicher SP1 als Adressinformation die interne Rufnummer des (hier ausgewählten) Kommunikationsendgerätes AG1 ab. Diese Rufnummer wird von der Anrufverteilungseinrichtung ACD1 über die Datenverbindung d2 zusammen mit der Information darüber, dass die übertragene Rufnummer das Vermittlungsziel der wartenden Kommunikationsverbindung a, a2 sein soll, zu der Vermittlungseinrichtung VE. Die Vermittlungseinrichtung VE baut nun eine Teil-Kommunikationsverbindung a3 zu dem Kommunikationsendgerät AG1 auf, wobei nun eine Rufsignalisierung ("Klingeln") bei dem Kommunikationsendgerät AG1 erfolgt und wobei durch die Vermittlungseinrichtung VE die Kommunikationsverbindung a mit der Teil-Kommunikationsverbindung a3 verbunden wird. Der Anrufer hört an seinem Kommunikationsendgerät AN nun einen Rufton. Sobald der ausgewählte Mitarbeiter an seinem Kommunikationsendgerät AG1 den Ruf annimmt, wird eine bidirektionale Sprachverbindung über die Kommunikationsverbindung a, a3 zwischen den Kommunikationsendgeräten AN und AG1 etabliert, so dass die eingehende Kommunikationsverbindung a nun endgültig mit dem Vermittlungsziel (Kommunikationsendgerät AG1) vermittelt ist.

Im Folgenden wird anhand der Figur 1 die Annahme und Vermittlung einer Kommunikationsverbindung b mit Hilfe einer erfindungsgemäßen Kommunikationsanordnung beschrieben. Sofern dabei Komponenten und Einrichtungen mit den gleichen Bezugszeichen wie in der Beschreibung der Figur 2 bezeichnet sind, handelt es sich dabei jeweils um dieselbe oder eine funktionsgleiche Komponente.

Das Kommunikationsendgerät AN des Anrufers baut über das öffentliche Kommunikationsnetzwerk PSTN eine Kommunikationsverbindung b zu dem Kommunikationsknoten KN2 auf, wo die Kommunikationsverbindung b über die Teil-Kommunikationsverbindung b1 zu der Verarbeitungseinheit IV2 (erste Verarbeitungseinheit) eines Kommunikationsservers KS2 weitergeleitet wird. Auch die Verarbeitungseinheit IV2 ist eine interaktive Verarbeitungseinheit (interactive voice response), mit deren Hilfe auch hier wieder von dem Anrufer Grundinformationen (Bezeichnung der gewünschten Abteilung, Postleitzahl des Anrufers o.ä.) abgefragt werden. Die gewonnenen Grundinformationen werden wieder zu einem Datensatz zusammengefasst und über die Datenverbindung e1 zu der Anrufverteilungseinrichtung ACD2 mit dem Speicher SP2 übertragen. Die Kommunikationsverbindung b, b1 wird nun weiterhin von dem Kommunikationsserver KS2 verarbeitet, nun aber von der Warteeinrichtung W2, die mit der Verarbeitungseinheit IV3 (zweite Verarbeitungseinheit) kombiniert ist und in dem vorliegenden Ausführungsbeispiel von der gleichen Anwendungssoftware gebildet wird, die auch die Verarbeitungseinheit IV2 bildet. Der Wechsel der Kommunikationsverbindung b1 von der Verarbeitungseinheit IV2 zu der Warteeinrichtung W2 mit der Verarbeitungseinheit IV3 geschieht dabei für den Anrufer unmerklich.

Die Verarbeitungseinheit IV3 fragt im Folgenden von dem Anrufer weitere Informationen ab, in diesem Fall beispielsweise die Kundennummer des Anrufers. Diese Kundennummer wird von dem Anrufer nach einer Aufforderung im Klartext eingesprochen und durch eine Sprachanalyseeinheit der Verarbeitungseinrichtung IV3 in eine numerische Form übersetzt und in den Datensatz eingefügt. Anhand der über die Datenverbindung e1 übertragenen Grundinformationen sucht die Anrufverteilungseinrichtung ACD2 aus den in dem Speicher SP2 gespeicherten Zuordnungstabellen einen geeigneten Mitarbeiter zur Entgegennahme des Anrufes aus, auch in diesem Fall ist es der Mitarbeiter mit dem Kommunikationsendgerät AG1, dem zusätzlich ein Personal-Computer PC1 zugeordnet ist. Die so gewonnene Rufnummer des Kommunikationsendgerätes AG1 (in einem VoIP-Sprachdatennetzwerk wäre das entsprechend die IP-Adresse eines Kommunikations-Clients AG1) wird nun als Adressinformation über die Datenverbindung e1 zu dem Kommunikationsserver KS2 übermittelt.

Der Kommunikationsserver KS2 baut nun eine Teil-Kommunikationsverbindung b2 zu der Vermittlungseinrichtung VE auf, um dadurch einen Ruf zu dem Kommunikationsendgerät AG1 aufzubauen. Über eine Teil-Kommunikationsverbindung b3 signalisiert nun die Vermittlungseinrichtung VE an dem Kommunikationsendgerät AG1 so lange einen Ruf, bis dieser Ruf an dem Kommunikationsendgerät AG1 angenommen wird. Bei Annahme des Rufes leitet der Kommunikationsserver KS2 bei der Vermittlungseinrichtung VE eine Übergabe der Teil-Kommunikationsverbindung b1 auf die Teil-Kommunikationsverbindung b2 ein. Diese ist ja bereits über die Teil-Kommunikationsverbindung b3 mit dem Kommunikationsendgerät AG1 verbunden ist. Eine solche Übergabe einer Kommunikationsverbindung ist eine Standardprozedur für Vermittlungseinrichtungen, die nun dazu führt, dass die Kommunikationsverbindung b mit der Teil-Kommunikationsverbindung b3 zusammengeschaltet wird und die nun nicht mehr benötigten Teil-Kommunikationsverbindungen b1, b2 abgebaut werden. Während der Übergabe sendet die Verarbeitungseinrichtung IV3 über die Datenverbindung e2 einen Kundendatensatz mit den Grundinformationen und mit den weiteren Informationen an den Personal-Computer PC1, so dass der Mitarbeiter mit dem Kommunikationsendgerät AG1 auf seinem Personal-Computer PC1 die bislang gesammelten Informationen über den Anrufer verfügbar hat. Dabei kann beispielsweise anhand der empfangenen Informationen eine Kunden-Datenbank geöffnet werden, so dass dem Mitarbeiter unverzüglich alle bereits vorliegenden Informationen der Kunden-Datenbank über den Anrufer (z.B. Kunden) zur Verfügung stehen.

In einer besonderen Ausführungsform der Kommunikationsanordnung können bis zu dem Zeitpunkt, an dem der Ruf an dem Kommunikationsendgerät AG1 angenommen wird, die von der Verarbeitungseinheit IV3 gesammelten weiteren Informationen zusammen mit den Grundinformationen wiederholt zu der Anrufverteilungseinrichtung ACD2 übertragen werden. Wenn dann, bedingt durch die weiteren Informationen, ein anderer als der zuerst ausgewählte Mitarbeiter aus dem Speicher SP2 herausgefiltert wird, wird dann die Adressinformation (interne Rufnummer) dieses anderen Mitarbeiters an den Kommunikationsserver KS2 übertragen, wonach der Rufaufbau über die Teil-Kommunikationsverbindung b2 zu dem Kommunikationsendgerät AG1 eingestellt und anstelle dessen ein neuer Rufaufbau initiiert wird, diesmal zu dem Kommunikationsendgerät des anderen, geeigneteren Mitarbeiters.

Anstelle getrennter Verarbeitungseinheiten (erste Verarbeitungseinheit IV2, zweite Verarbeitungseinheit IV3) kann auch eine einzige Verarbeitungseinheit verwendet werden, wobei diese dann zweistufig arbeitet, indem zwischen zwei Betriebszuständen unterschieden wird. Der erste Betriebszustand gilt dabei so lange, bis genügend (Grund-) Informationen für eine (zumindest erste, vorläufige) Vermittlung registriert sind. Dann geht die Verarbeitungseinheit in den zweiten Betriebszustand über, in welchem parallel zur Erfassung der weiteren Informationen "im Hintergrund" der Vermittlungsvorgang zu (dem zumindest vorläufigen) Vermittlungsziel stattfindet. Dieses Vermittlungsziel kann, wie bereits ausgeführt, während dieser Phase auch noch geändert werden, beispielsweise aufgrund der weiteren Informationen oder aufgrund einer Nicht-Erreichbarkeit des ausgewählten Vermittlungszieles.

Durch die Verwendung einer einzigen, beispielsweise zweistufigen Verarbeitungseinheit wird ein für den Anrufer merklicher Wechsel von einer zu einer anderen Verarbeitungseinheit vermieden; außerdem ist der programmtechnische Aufwand für eine einzige, wenn auch mehrstufige Verarbeitungseinheit geringer, weil die mehrfache Vorhaltung vieler Funktionsmodule vermieden werden kann. Außerdem hat eine solche "kombinierte" Verarbeitungseinheit in Summe weniger Schnittstellen als die getrennte Architektur, was die Zuverlässigkeit einer solchen Anordnung erhöht.

Bei den VoIP-Netzwerken wird oft nicht nur Sprache übertragen, sondern es werden auch andere Kommunikationsdienste verwendet, beispielsweise Video oder Text (z.B. "Chatten"). Auch diese Kommunikationsdienste können interaktiv in die Vermittlung von Kommunikationsverbindungen einbezogen werden, so dass beispielsweise während der Vermittlung eines Bildtelefonats als Warteinformation ein Video-Clip gezeigt wird oder bei der Abfrage von Informationen grafische Auswahlmenüs verwendet werden.

## Patentansprüche

1. Kommunikationsanordnung zur automatisierten Annahme und Vermittlung einer eingehenden Kommunikationsverbindung (b), mit einer Vermittlungseinrichtung (VE2) zur Weiterverbindung der Kommunikationsverbindung (b) zu einem Vermittlungsziel (AG1) ,
mit einer ersten Verarbeitungseinheit (IV2) zur interaktiven Abfrage, Speicherung und Auswertung von Grundinformationen eines Anrufers,
wobei die erste Verarbeitungseinheit (IV2) zum Zusammenwirken mit einem Speicher (SP2) ausgebildet ist, in dem anhand der Grundinformationen das Vermittlungsziel (AG1) auswählbar und aus dem eine Adressinformation über das ausgewählte Vermittlungsziel (AG1) abrufbar ist,
wobei die erste Verarbeitungseinheit (IV2) zur Übertragung der Adressinformation zu der Vermittlungseinrichtung (VE2) für die Weiterverbindung der Kommunikationsverbindung (b) und zur Übergabe der Kommunikationsverbindung (b) zu einer Warteeinrichtung (W2) eingerichtet ist, wobei
die Warteeinrichtung (W2) zum Halten der weiterverbundenen Kommunikationsverbindung ausgestaltet ist und das Halten solange erfolgt, bis die weiterverbundene Kommunikationsverbindung angenommen wird,
**dadurch gekennzeichnet, dass**
die Warteeinrichtung (W2) mit einer zweiten Verarbeitungseinheit (IV3) zur interaktiven Abfrage, Speicherung und Auswertung von weiteren Informationen ausgestattet ist.

2. Kommunikationsanordnung nach Patentanspruch 1,
**dadurch gekennzeichnet, dass**
die Warteeinrichtung (W2) mit der zweiten Verarbeitungseinheit (IV3) durch eine Stufe der ersten Verarbeitungseinheit (IV2) gebildet ist.

3. Kommunikationsanordnung nach einem der vorhergehenden Patentansprüche,
**dadurch gekennzeichnet, dass**
die zweite Verarbeitungseinheit (IV3) zum Zusammenwirken mit dem Speicher (SP2) ausgebildet ist, in dem anhand der Grundinformationen und der weiteren Informationen ein alternatives Vermittlungsziel (AG2, AGN) auswählbar ist und aus dem eine weitere Adressinformation über das alternative Vermittlungsziel (AG2, AGN) abrufbar ist,
wobei die zweite Verarbeitungseinheit (IV3) zur Übertragung der Adressinformation zu der Vermittlungseinrichtung (VE2) für die Weiterverbindung der Kommunikationsverbindung (b) zu dem alternativen Vermittlungsziel (AG2, AGN) eingerichtet ist.

4. Verarbeitungseinheit (IV2) zur interaktiven Abfrage, Speicherung und Auswertung von Grundinformationen eines Anrufers,
wobei die Verarbeitungseinheit (IV2) zum Zusammenwirken mit einem Speicher (SP2) ausgebildet ist, in dem anhand der Grundinformationen das Vermittlungsziel (AG1) auswählbar und aus dem eine Adressinformation über das ausgewählte Vermittlungsziel (AG1) abrufbar ist,
wobei die Verarbeitungseinheit (IV2) zur Übertragung der Adressinformation zu der Vermittlungseinrichtung (VE2) für die Weiterverbindung der Kommunikationsverbindung (b) und zur Übergabe der Kommunikationsverbindung (b) zu einer Warteeinrichtung (W2) eingerichtet ist,
**dadurch gekennzeichnet, dass**
die Warteeinrichtung (W2) zum Halten der weiterverbundenen Kommunikationsverbindung ausgestaltet ist und das Halten solange erfolgt, bis die weiterverbundene Kommunikationsverbindung angenommen wird, und
die Warteeinrichtung (W2) mit einer zweiten Verarbeitungseinheit (IV3) zur interaktiven Abfrage, Speicherung und Auswertung von weiteren Informationen ausgestattet ist.

5. Verarbeitungseinheit (IV2) nach Patentanspruch 4,
**dadurch gekennzeichnet, dass**
die Warteeinrichtung (W2) mit der zweiten Verarbeitungseinheit (IV3) durch eine Stufe der ersten Verarbeitungseinheit (IV2) gebildet ist.

6. Verfahren zum Betrieb einer Verarbeitungseinheit (IV2, IV3) zur interaktiven Abfrage, Speicherung und Auswertung von Informationen eines Anrufers, wobei folgende Verfahrensschritte ausgeführt werden:
in Schritt a) wird eine Kommunikationsverbindung (b) des Anrufers von der Verarbeitungseinheit (IV2, IV3) angenommen,
in Schritt b) werden durch die Verarbeitungseinheit (IV2, IV3) in einem ersten interaktiven Prozess Grundinformationen von dem Anrufer abgefragt,
in Schritt c) werden von der Verarbeitungseinheit (IV2) durch Zugriff auf einen Speicher (SP2) anhand der Grundinformationen Adressinformationen eines Vermittlungsziels (AG1) für den Anrufer ermittelt und ausgegeben und damit die Übergabe der Kommunikationsverbindung zu dem ermittelten Vermittlungsziel (AG1) initiiert, und
in Schritt d) werden durch die Verarbeitungseinheit (IV2, IV3) in einem zweiten interaktiven Prozess weitere Informationen von dem Anrufer abgefragt.

7. Verfahren nach Patentanspruch 6,
**dadurch gekennzeichnet, dass**
Schritt d) nach Ausgabe der Adressinformationen beginnt.

8. Verfahren nach Patentanspruch 6 oder 7,
**dadurch gekennzeichnet, dass**
die in Schritt d) gewonnenen weiteren Informationen zur Bestimmung eines aktualisierten Vermittlungszieles unter Zugriff auf den Speicher (SP2) benutzt werden, wonach in einem Schritt e) von der Verarbeitungseinheit (IV2) aktualisierte Adressinformationen des aktualisierten Vermittlungszieles ermittelt und ausgegeben werden, wodurch die Übergabe der Kommunikationsverbindung zu dem aktualisierten Vermittlungsziel initiiert wird.
